# EUROPEAN PATENT SPECIFICATION

(11) **EP 1 558 528 B1**
(45) Date of publication and mention of the grant of the patent: **22.03.2006**
(21) Application number: 03770150.5
(22) Date of filing: 22.10.2003
(51) Int. Cl.: C02F 1/56, C08B 31/00

(54) **PRODUCT FOR THE TREATMENT OF WATER AND WASTEWATER AND A PROCESS FOR PRODUCING SAID PRODUCT**
PRODUKT ZUR BEHANDLUNG VON WASSER UND ABWASSER SOWIE VERFAHREN ZUR HERSTELLUNG DES PRODUKTS
PRODUIT POUR LE TRAITEMENT DE L'EAU ET DES EAUX USEES ET PROCEDE DE PRODUCTION DUDIT PRODUIT

(30) Priority: 04.11.2002 NO 20025291
(43) Date of publication of application: 03.08.2005
(73) Proprietor: YARA International ASA, 0202 Oslo (NO)
(72) Inventor: AESOY, Anette, N-3746 Skien (NO); HARALDSEN, Kristian, N-3719 Skien (NO)
(74) Representative: Wallace, Sheila Jane
(86) International application number: PCT/NO2003/000348
(87) International publication number: WO 2004/041732

(56) References cited:
- EP-A1- 0 490 424
- EP-A2- 0 874 000
- US-A- 4 785 087
- BOBACKA V. ET AL.: 'Interactions between cationic starch and anionic trash of a peroxide-bleached TMP at different salt concentrations' JOURNAL OF PULP AND PAPER SCIENCE vol. 24, no. 3, 1998, pages 78 - 81, XP002972891

## Description

The present invention relates to a product for the treatment of water and wastewater and a process for producing said product.

Chemical treatment of wastewater comprises coagulation and flocculation. In the coagulation phase, particles can be destabilised by electrostatic neutralisation of the particle surface, and a few particles assemble in micro flocs. By the flocculation larger aggregates of micro flocs form macro flocs, which quickly can be separated from the water phase by for instance sedimentation or flotation.

In municipal and industrial treatment plants most of the chemical treatment is performed with inorganic metal salts (iron chloride, iron sulphate, aluminium chloride, prepolymerized aluminium chloride etc.). In addition, synthetic cationic polymers as polyamine and poly-diallyl dimethyl ammonium chloride (poly-DADMAC) are used as a coagulant alone or in combination with metal salts. Also some cationic biopolymers, as for instance chitosan are used as coagulants. Adjustment of pH and addition of inorganic particles are also used to obtain coagulation and flocculation. Variants of cationic, anionic and non-ionic and poly acryl amides are used as a flocculant aid.

Metal salts have the disadvantage that the metal ions react with water and form metal hydroxide. For example, Fe³⁺ will form Fe(OH)₃, which will cause a significant increase in the sludge production, both in volume and dry solids. An increased sludge production leads to increased costs related to sludge treatment, handling and eventually depositing. Sludge formed with metal salts is less suitable as a soil improvement agent in agriculture, due to possible heavy metal residues and covalent bonding of phosphate to the metal ions. Metal salts may also not give the wanted effect on some water and wastewater qualities because of e.g. pH, alkalinity, fat/oil content and suspended solids characteristics. In some situations an unreasonable high dose of metal salts is required to achieve the wanted effect.

Metal chlorides are corrosive and lead to increased costs related to corrosion on plants and mains system. Metal sulphates may lead to problems related to biological hydrogen sulphide formation under anaerobic conditions. In some situations there are also regulations on discharge of sulphate and chloride ions. Aluminium ions are noxious in too high concentrations.

There are questions related to the use of synthetic polymers due to ecotoxicological effects in the environment as well as to health and safety related to handling of these products. Synthetic polymers such as polyamine and poly-DADMAC might not be sufficiently broken down and high concentrations in sludge might have a negative effect on soil structure and by uptake by plants when sludge is used as a soil improvement agent. In addition, the products are relatively expensive.

Poly acryl amide has generally a high resistance to biological degradation, and commercial products must be marked as carcinogenic, because of acryl amide residues in the products.

Treatment of water and wastewater with starch is known in the art, and it would be of interest to use modified cationic starch. Modified starch is made of native starch, which is a pure and renewable nature product. By cationization charged groups are bounded to the native starch, which makes it suitable as a coagulant/flocculant, and also cationic starch is possible to break down biologically. This makes it more suitable than synthetic polymers and metal salts when sludge is used as a soil improvement agent and also gives better conditions for discharging treated water to the recipient. The modification of cationic starch gives the starch better efficiency and is a cost effective solution compared to synthetic polymers because of lower dose, and also compared to metal salts because of reduced sludge production. Modified starch also shows a better overall performance than synthetic polymers and metal salts on some water and wastewater qualities. It seems to work as both coagulant and flocculant.

When starch powder is dispersed in a water phase, initially the starch particles swell by wetting and absorption of water. This is a slow process that is enhanced by high temperature. Normally, starch is therefore dissolved by cooking at 95 °C for 30 - 60 minutes. When the starch particles are well swollen, the individual polymer chains start to untangle, and the solution will appear more or less clear. When the solution is cooled to room temperature, this process may be partly reversed leading to an opaque appearance of the solution. Since there are great expenses related to heating and cooking of the solution as well as the time and volumes required, it would be of interest to find a method to modify the starch without having to heat / cook the starch solution, since this would make the use of cationic starch as a coagulant an easier and a more economic solution.

EP 0 737 210 B1 relates to a method of producing cationic starch derivatives in water solution form, where the starch molecule structure is modified by oxidation prior to the cationizing step. The solids of the reacting mixture during the cationizing reaction is maintained over 50 %, advantageously over 55 %. The starch is added to the reaction mixture in pulverized or slurry form prior to the cationizing step and the splitting of starch is performed with the aid of an oxidizer (peroxide). The cationizing chemical is preferably 2,3-epoxypropyltrimethyl ammonium chloride. The method described in this patent gives relatively high production costs and is not very environmental friendly due to the use of chemicals to oxidise the starch molecules. NaOH is added during the catioizing, and this will give an end product with a high pH, which has to be handled with care.

WO 99/61377 relates to a method for treatment of aqueous streams comprising biosolids. A process is provided which can be used to clarify substantially aqueous streams and optionally separate biosolids, especially proteins, from food processing operations, which comprises contacting an aqueous stream comprising biosolids with an anionic colloid and an organic polymer, to flocculate the biosolids. Cationic starch can be used in combination with metal salts and/or activated silica, but the starch is not modified before use.

Remmer, J. and Eklund, D., Wochenbl. Papierfabr. 119, no. 21,: 855 - 859 (Nov. 15, 1991), describe absorption of starch in surface sizing. The main parameter influencing the dynamic absorption of starch size during surface sizing is the viscosity of the starch solution, regardless of the method of viscosity adjustment used (drying or modification of macromolecular chain length). Viscosity is also the dominant temperature dependent variable.

The main object of the present invention was to arrive at a product for the treatment of water and wastewater, which would give improved treatment of the water and wastewater and thus improved quality of the water.

Another object was that the product should be natural based, environmentally friendly and biodegradable.

A further object was that the product should be safe to handle, be pH neutral and contain no toxic components in itself or by degradation.

A further object was to obtain a product, which would give low treatment costs.

It was also an object of the present invention to obtain a process for producing a product for the treatment of water and wastewater, which would give low production costs.

These and other objects of the invention were obtained by the product and the process as described below. The invention is further characterized by the patent claims.

The product consists of a high cationic starch powder with >10% charge density (degree of substitution) dissolved in a brine solution. In principle, any native starch can be used. It was found that the starch powder preferably could be potato starch, and the most preferable concentration was found to be 15 - 25 weight %. It was surprisingly found that when salts having two-valent ions were used, it was possible to obtain the desirable starch solution. The brine solution may be seawater, CaCl₂, Ca(NO₃)₂, MgCl₂, etc. or mixtures thereof. The viscosity should be <10000 cP (mPa s) at temperatures > 15 °C. The higher the concentration of the brine solution is, the easier starch powder will be dissolved.

The high concentrated starch solution should preferably comprise > 10 g/l mineral salts from seawater, CaCl₂, Ca(NO₃)₂, MgCl₂ etc. or mixtures thereof, and > 5 weight % starch powder with charge density (degree of substitution) >10%. The starch solutions had a pH in the range 4-8.

The product quality was controlled by end viscosity and functionality as a coagulant and flocculant for particle removal in wastewater treatment. Functionality tests were conducted by standard jar-tests where a 1 litre wastewater sample was added specified amounts of starch solution and the turbidity or suspended solids content of the clear water phase was measured after flocculation and settling. The jar-tests conditions were 30 sec mixing at high speed (500 rpm), 10 min mixing at slow speed (50 rpm) and 15 min settling.

It was found that a high shear mixer could be used to mix starch powder and a brine solution to produce a high concentrated starch solution with excellent properties as a coagulant/flocculant for water treatment. The starch powder was gradually fed into the brine solution using the high shear mixer.

The treatment with a high shear mixer was initially used to cut the polymer chains into shorter units, as this was shown to be favourable for synthetic coagulants in earlier studies. The effect of the high shear mixer is observed as reduced viscosity on the polymer solution, and it is assumed that this is caused by degradation of the macromolecules. The high shear mixer may also have other effects, and one may be that it promotes the dissolution process. If this is so, cooking of the starch solution may not be necessary, and the use of cationic starch as coagulant will then be an easier and a more economic solution.

The function of the high shear mixer was to generate an efficient coagulant by chopping the starch macromolecule chain to reduce the viscosity of the solution to a practical level for application (<10000 cP (mPa s)).

The function of the brine solution was to make the dissolution of starch easier, to be able to produce the high concentrated solution, have a positive effect on the product stability, and have a positive effect on the product function as a coagulant.

The function of the gradual feeding of powder was to optimise the function of the high shear machine by keeping the viscosity within a level that resulted in efficient starch chopping and be able to produce a high concentrated solution.

The present invention will in its widest scope comprise a product for the treatment of water and wastewater, where said product comprises high cationic starch powder and a brine solution comprising sea water and/or salts comprising two-valent ions. The salt may be CaCl₂ and/or Ca(NO₃)₂ and/or MgCl₂. The concentration of the brine solution is 5 - 50 g/l, preferably 10 - 40 g/l. The cationic starch powder has > 10 % charge density (degree of substitution). The starch powder is preferably potato starch, and the starch concentration is 5 - 25 weight %, preferably 15 - 25 weight %. The viscosity is 300 - 10000 cP (mPa s), preferably 1000 - 5000 cP (mPa s).

The invention also comprises a process for producing a product for the treatment of water and wastewater, where a high cationic starch powder and a brine solution comprising sea water and/or salts comprising two-valent ions are mixed in a high shear mixer to keep the viscosity < 10000 cP (mPa s) at temperatures > 15°°C. The viscosity is preferably kept at 1000 - 5000 cP (mPa s). The powder to liquid feed rate is > 100 kg/m³ h. The production temperature is 50-100°C, preferably 60 - 80 °C.

The invention is further described and explained in the following figures and examples.
- Fig. 1: shows a system for the production of a high concentrated starch solution.
- Fig. 2: shows the relation between starch concentration and viscosity at different temperatures.
- Fig. 3: shows comparison of the functionality of various starch solutions (5 - 20 weight %) in seawater and CaCl₂, respectively.
- Fig. 4: shows comparison of the functionality of an 18 weight % starch solution produced in full scale with an in-line mixer and a 0.5 weight % solution produced in lab scale in a 1 litre beaker.
- Fig. 5: shows the relation between treatment time, temperature and viscosity for a full scale production of a 15 weight % starch solution.

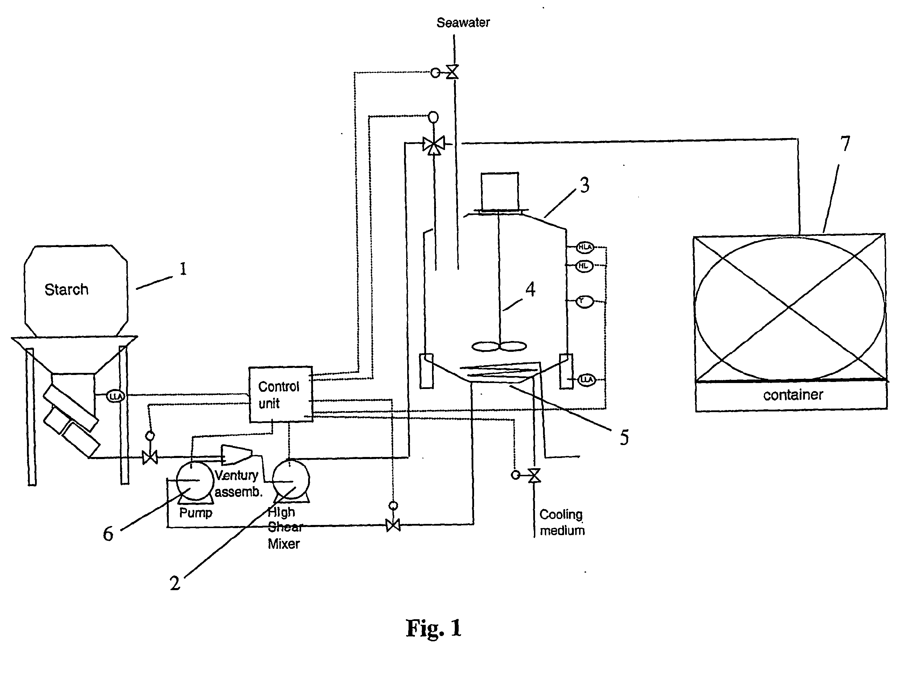

Fig. 1 shows a production plant for the production of high concentrated starch solutions. Starch powder is led from a large powder storage system 1 to a high shear mixer 2 where it is gradually fed into a brine solution, which is led to the high shear mixer 2 from a mixing/holding tank 3 equipped with a mixer 4 and a cooling device 5. The central part of the production plant is the high shear mixer 2. The high shear mixer 2 should preferably be an in-line turbo mixer with high shear forces where liquid and powder are immediately and efficiently mixed. The shear forces must be sufficient to keep the viscosity < 10000 cP (mPa s) at temperatures > 15 °C with a powder to liquid feed rate of >100 kg/m³ h. This requires a high shear mixer with power > 15 kW. The temperature of the starch solution increases with increasing concentration in the production. The production device including the high shear mixer 2 should be able to work at temperatures up to 70-100 °C. Elevated temperature is positive for the dissolution efficiency and product stability. The production temperature should be > 50 °C, preferably 60 - 80 °C.

The starch solution is re-circulated over the high shear mixer 2 via the mixing/holding tank 3. The re-circulation can be facilitated by the high shear mixer 2 or by an extra pump 6. In the mixing/holding tank 3 the liquid must be vigorously mixed in order to achieve a homogenous solution and secure that the whole liquid volume is sufficiently treated by the high shear mixer 2. The re-circulation flow must be big enough to pump the whole volume through the high shear pump 6 more than 50 times. The production can be batchwise or continuous. The manufactured starch solution is led from the mixing/holding tank 3 to a larger storage tank 7.

The treatment time with the high shear mixer 2 should generally be 5 minutes or more for a starch concentration of 5 weight %, and generally one hour or more for a starch concentration of 25 weight %. The necessary modification time will be sligthly longer for a continous process than a batchwise process.

### Example 1

A lab scale test was performed where starch solutions were prepared both static, where cationic starch powder was added gradually to a beaker with a high shear mixer and inline, where cationic starch powder was added gradually to a solution pumped through a high shear mixer. In the static mode, the whole liquid volume was mixed continuously. In the in-line mode, one had to ensure enough pass-throughs in the high shear mixer to achieve the wanted effects. The test was conducted to evaluate difference between static and in-line systems with respect to necessary modification time and modification efficiency.

Cationic potato starch powder was mixed with seawater. The starch concentrations were varied, and changes in viscosity were measured as a function of time. The production temperature was about 60 - 80 °C, and after the mixing the solutions were cooled down to 20 °C. The products were tested as coagulants/flocculants on a pulp and paper wastewater using jar-tests. The jar-tests conditions were 30 sec mixing at high speed (500 rpm), 10 min mixing at slow speed (50 rpm) and 15 min settling. The starch modification conditions and results are shown in Table 1.

Table 1 shows test conditions and results from a lab scale test (static and in-line system) with relations between starch concentration, various modification time, end viscosity at 20 °C, and results from tests of starch product quality as coagulant flocculant on a pulp and paper wastewater.

**Table 1**

| High shear lab mixer (Silverson) | Power 0.25 kW | Static | Static | Static | Inline | In-line |
|---|---|---|---|---|---|---|
| Concentration | Weight % starch | 4.8 | 9.1 | 18.7 | 9.7 | 18 |
| Volume | Litre | 0.8 | 0.7 | 1 | 1 | 1 |
| Mod. Time | Minutes | 25 | 25 | 55 | 38 | 113 |
| End viscosity | cP (mPa s) | 76 | 535 | 6500 | 455 | 3900 |
| Starch product quality as coagulant/flocculant on a pulp and paper wastwater | Effect on turbidity removal | Excellent | Good | Moderate | Good | Excellent |

As can be seen from the Table, the required modification time increased with increasing concentration of the starch powder. The necessary modification time was sligthly longer in an in-line mixer where the starch solution was re-circulated through the high shear mixer than in a static high shear mixer system. The Table shows that insufficient modification time, as measured by the product qaulity as coagulant/flocculant, results in higher viscosity. The desired modification time in a full scale production plant will be regulated by production system, product functionality and product handling.

### Example 2

Starch modification tests were conducted in a 1 litre beaker with a static mixer with a treatment time sufficient to reach the desired starch quality with respect to the effect as a coagulant/flocculant, referred to as "Excellent" in Example 1. Cationic potato starch powder was added gradually to seawater until concentrations of about 5 weight %, 10 weight % and 17 - 20 weight % were reached. The production temperature was about 60 - 80°C. The solutions were cooled down to 40, 30 and 20 °C, and at each temperature the viscosity was measured for the different solutions.

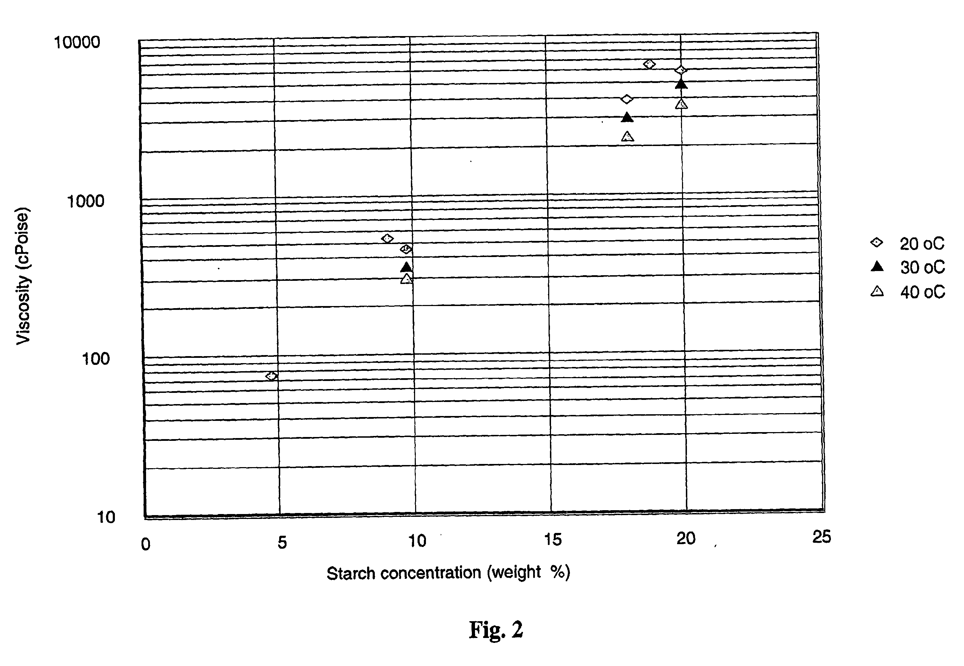

Fig. 2 shows the relation between starch concentration and viscosity at 20, 30 and 40 °C with seawater used as brine solution. As can be seen from the Figure, a starch concentration of about 10 weight % gives viscosities in the range 300 - 600 cP (mPa s). Starch concentrations of about 17 - 20 weight % give viscosities in the range 2000 - 7000 cP (mPa s). Within the same starch concentration range, the viscosity is highest when the temperature is 20 °C and the lowest viscosity values are obtained at 40 °C. Generally, the viscosity increases with decreasing temperatures.

### Example 3

Three different concentrations of starch solutions were prepared by mixing cationic potato starch powder with seawater. The concentrations of the starch solutions were 10 weight %, 15 weight % and 20 weight %. Two different starch solutions were prepared by mixing the cationic potato starch powder with a 20g/l CaCl₂ solution. The starch solution concentrations were 15 weight % and 20 weight %. The functionality of these five starch solutions was compared by jar-tests on wastewater from a pulp and paper mill. Jar-tests were conducted in 1 litre beakers with 30 sec mixing (500 rpm), 10 min flocculation (50 rpm) and 15 min settling. The dosing of the starch solutions corresponded to 20-120 ppm as starch (not as ppm of the solutions).

The starch solutions were processed 20-40 minutes in 1 litre beakers with a high shear mixer. The temperature during mixing was about 60 - 80 °C. The longer processing time, the more efficient the starch product would be because of the more complete modification of the starch macromolecules. Above a certain modification time, no improvements are achieved. With sufficient processing time, which depends on the concentration and production system, there should generally be no difference between the starch products produced with different brine solutions. After the modification, the solutions were cooled down to room temperature (20 °C) and products were tested as coagulants/flocculants on a pulp and paper wastewater using a jar-test.

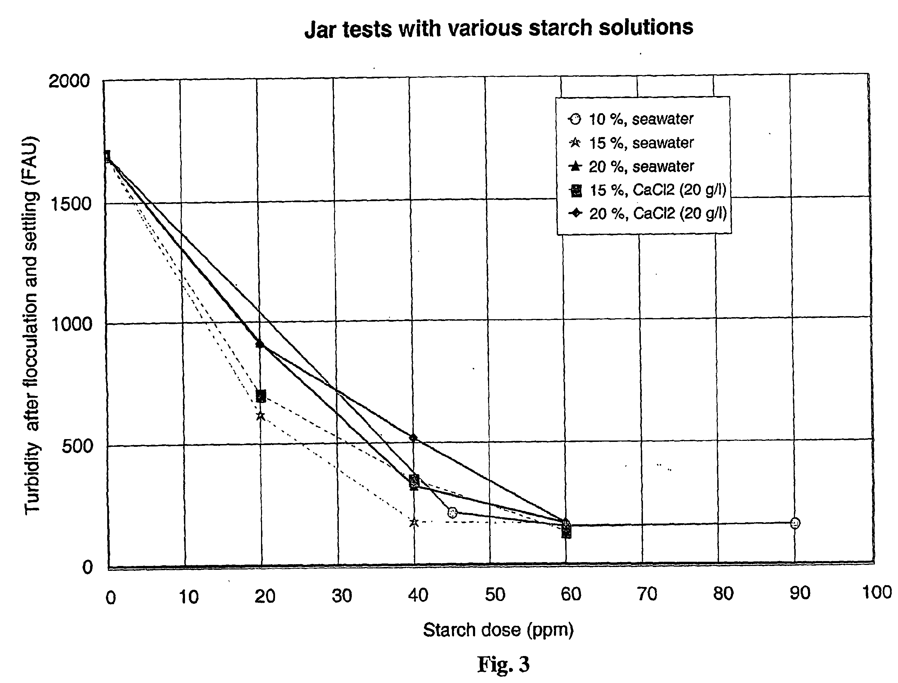

Fig. 3 shows the results from the jar-tests on pulp and paper wastewater where 10 weight %, 15 weight % and 20 weight % starch solutions were produced with seawater and 15 weight % and 20 weight % starch solutions with CaCl₂ (20 g/l) respectively. The turbidity after coagulation/flocculation and settling (FAU) is shown as a function of starch dose (ppm).

The results show that the turbidity is effectively reduced already at 20 ppm and optimal treatment efficiency is achieved at a dose of 40-60 ppm starch, which is quite favourable relative to the use of metal salts. There is no significant difference in product quality as coagulant/flocculant when using seawater or CaCl₂ as brine solution. The variation in turbidity between the different products is probably a result of insufficient modification of the cationic starch.

### Example 4

A test was conducted to compare the functionality of starch solutions produced in a 1 litre beaker with a static mixer versus a starch solution produced in full scale with an inline mixer. In addition, the starch concentrations were significantly different in order to study how this affected the functionality of the starch product as coagulant/flocculant. A 0.5 weight % starch solution was produced with a static mixer in a 1 litre beaker and an 18 weight % starch solution was produced with the in-line in a full scale plant as illustrated in Fig. 1. A 0.5 weight % starch solution was tested even though such a low concentration will not be of practical use. In both solutions, cationic potato starch powder was mixed with seawater and the modification time was sufficient to achieve the optimal functionality of the product as coagulant/flocculant, about 2 minutes for the 0.5 weight % solution in the lab scale and about one hour for the 18 weight % solution in the full scale plant. Temperature during mixing was about 60 - 80 °C, and after the mixing the solutions were cooled down to room temperature (20 °C), and tested as coagulants/flocculants on a pulp and paper wastewater with jar-tests.

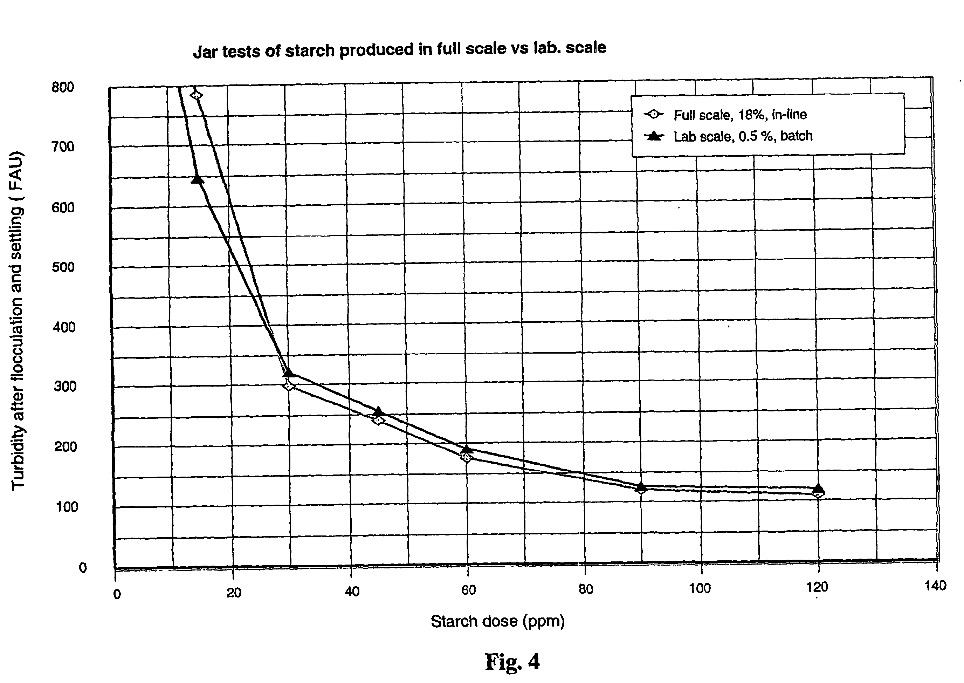

Fig. 4 shows the results from the jar-tests with wastewater from a pulp and paper mill with the 18 weight % starch solution produced with in-line mixer in full scale (in-line) and the 0.5 weight % starch solution produced in a 1 litre beaker with static mixer (lab scale, batch). The turbidity after flocculation and settling (FAU) is shown as a function of starch dose (ppm). As can be seen from the Figure, the starch products produced in lab scale and full scale with significantly different concentrations are well in accordance. This means that the product functionality is not sensitive to the production method and starch solution concentration.

### Example 5

A test was conducted in a full scale plant (as shown in Fig. 1) to study the effect of cationic starch powder feeding and treatment time on viscosity and temperature. A 15 weight % starch solution was produced from cationic potato starch powder and seawater. The cationic potato starch powder was added batchwise to the solution. The solution was cooled down between each addition of starch powder.

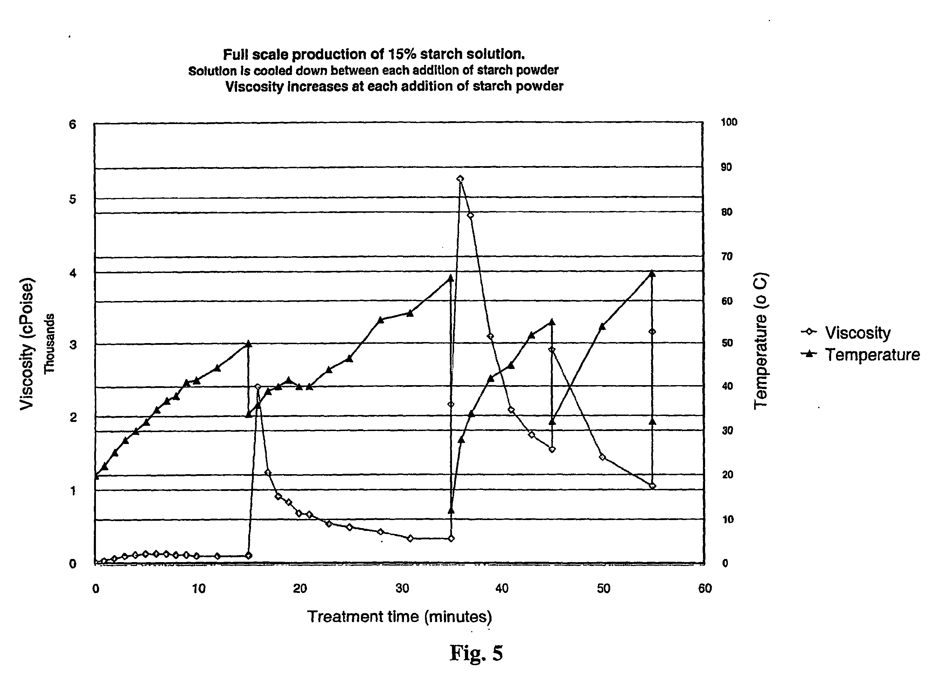

Fig. 5 shows the relation between treatment time (minutes), temperature (°C) and viscosity (cP (mPa s)) in production of a 15 weight % starch solution in seawater. From Fig. 5 it is seen that viscosity increases at each addition of starch powder and that it decreases quite quickly as the result of the high-shear mixing. The temperature increases gradually with treatment time, but increases generally more at higher viscosity at addition of starch power. In a full scale plant it will be important to find the right balance between starch powder feed rate, viscosity and temperature increase.

The product according to the invention is excellent as a coagulant/flocculant for water and wastewater treatment alone or in combination with other chemicals. For municipal wastewater treatment, the product may typically be combined with a minimal dose of metal salt (ferric or aluminium) to achieve good results with lower sludge production. For pulp and paper effluents, it functions well alone or it can be combined with a flocculant, e.g. poly acryl amide or activated silica, for enhanced sludge separation. For dairy effluents and oil containing water, it shows excellent performance together with activated silica.

Benefits of the product and production method are lower treatment costs relative to other starch-based products available. The product gives improved treatment of water and wastewater. The product is also environmental friendly, biodegradable and safe to handle, it is pH neutral and comprises no toxic components.

## Claims

1. Product for the treatment of water and wastewater **characterised in that** said product comprises high cationic starch powder dissolved in a brine solution comprising sea water and/or salts comprising two-valent ions, where the dissolved starch polymer chains are cut in shorter units.

2. Product according to claim 1, **characterised in that** the salts are CaCl₂ and/or Ca(NO3₃)₂ and/or MgCl₂.

3. Product according to claim 1 or claim 2, **characterised in that** the concentration of the brine solution is 5-50 g/l, preferably 10-40 g/l.

4. Product according to any one of the preceding claims, **characterised in that** the cationic starch powder has > 10% charge density (degree of substitution).

5. Product according to any one of the preceding claims, **characterised in that** the starch powder is potato starch.

6. Product according to any of the preceding claims, **characterised in that** the starch concentration is 5 - 25 weight %, preferably 15 - 25 weight %.

7. Product according to any one of the preceding claims, **characterised in that** the viscosity is 300 - 10000 cP (mPa s), preferably 1000 - 5000 cP (mPa s).

8. Process for producing a product for the treatment of water and wastewater, **characterised in that** a high cationic starch powder and a brine solution comprising sea water and/or salts comprising two-valent ions is mixed in a high shear mixer where the dissolved starch polymer chains are cut in shorter units to keep the viscosity < 10000 cP (mPa s) at temperatures > 15°C.

9. Process according to claim 8, **characterised in that** the viscosity is kept at 1000 - 5000 cP (mPa s).

10. Process according to claim 8 or claim 9, **characterised in that** the powder to liquid feed rate is > 100 kg/m³ h.

11. Process according to any one of claims 8 to 10, **characterised in that** the production temperature is 50 - 100°C, preferably 60-80°C.

## Revendications

1. Produit pour le traitement de l'eau et des eaux usées, **caractérisé en ce que** ledit produit comprend une poudre d'amidon fortement cationique dissoute dans une solution de saumure comprenant de l'eau de mer et/ou des sels comprenant des ions bivalents, où les chaînes de polymère d'amidon dissous sont coupées en motifs plus courts.

2. Produit selon la revendication 1, **caractérisé en ce que** les sels sont CaCl₂ et/ou Ca(NO₃)₂ et/ou MgCl₂.

3. Produit selon la revendication 1 ou 2, **caractérisé en ce que** la concentration de la solution de saumure est de 5 à 50 g/l, de préférence de 10 à 40 g/l.

4. Produit selon l'une quelconque des revendications précédentes, **caractérisé en ce que** la poudre d'amidon cationique a une densité de charge > 10 % (degré de substitution).

5. Produit selon l'une quelconque des revendications précédentes, **caractérisé en ce que** la poudre d'amidon est de l'amidon de pomme de terre.

6. Produit selon l'une quelconque des revendications précédentes, **caractérisé en ce que** la concentration en amidon est de 5 à 25 % en poids, de préférence de 15 à 25 % en poids.

7. Produit selon l'une quelconque des revendications précédentes, **caractérisé en ce que** la viscosité est de 300 à 10000 cP (mPa s), de préférence de 1 000 à 5 000 cP (mPa s).

8. Procédé de production d'un produit pour le traitement de l'eau et des eaux usées, **caractérisé en ce qu'**une poudre d'amidon fortement cationique et une solution de saumure comprenant de l'eau de mer et/ou des sels comprenant des ions bivalents sont mélangées dans un mixeur à fort cisaillement où les chaînes de polymère d'amidon dissous sont coupées en motifs plus courts afin de maintenir la viscosité < 10 000 cP (mPa s) à des températures > 15°C.

9. Procédé selon la revendication 8, **caractérisé en ce que** la viscosité est maintenue à 1 000 - 5 000 cP (mPa s).

10. Procédé selon la revendication 8 ou la revendication 9, **caractérisé en ce que** la vitesse d'alimentation de la poudre dans du liquide est > 100 kg/m³h.

11. Procédé selon l'une quelconque des revendications 8 à 10, **caractérisé en ce que** la température de production est de 50 à 100°C, de préférence de 60 à 80°C.

## Patentansprüche

1. Produkt für die Behandlung von Wasser und Abwasser, **dadurch gekennzeichnet, daß** das Produkt sehr kationisches Stärkepulver umfaßt, gelöst in einer Solelösung umfassend Meerwasser und/oder Salze, umfassend zweiwertige Ionen, wobei die gelösten Stärkepolymerketten in kürzere Einheiten geschnitten werden.

2. Produkt gemäß Anspruch 1, **dadurch gekennzeichnet, daß** die Salze CaCl₂ und/oder Ca(NO₃)₂ und/oder MgCl₂ sind.

3. Produkt gemäß Anspruch 1 oder 2, **dadurch gekennzeichnet, daß** die Konzentration der Solelösung 5 bis 50 g/l, vorzugsweise 10 bis 40 g/l, beträgt.

4. Produkt gemäß einem der vorstehenden Ansprüche, **dadurch gekennzeichnet, daß** das kationische Stärkepulver >10% Ladungsdichte (Substitutionsgrad) aufweist.

5. Produkt gemäß einem der vorstehenden Ansprüche, **dadurch gekennzeichnet, daß** das Stärkepulver Kartoffelstärke ist.

6. Produkt gemäß einem der vorstehenden Ansprüche, **dadurch gekennzeichnet, daß** die Stärkekonzentration 5 bis 25 Gew.%, vorzugsweise 15 bis 25 Gew.%, beträgt.

7. Produkt gemäß einem der vorstehenden Ansprüche, **dadurch gekennzeichnet, daß** die Viskosität 300 bis 10.000 cp (mPa·s), vorzugsweise 1.000 bis 5.000 cP (mPa·s), beträgt.

8. Verfahren zur Erzeugung eines Produkts für die Behandlung von Wasser und Abwasser, **dadurch gekennzeichnet, daß** ein sehr kationisches Stärkepulver und eine Solelösung umfassend Meerwasser und/oder Salze, umfassend zweiwertige Ionen, in einem Hochschermischer vermischt werden, wobei die gelösten Stärkepolymerketten in kürzere Einheiten geschnitten werden, um die Viskosität <10.000 cp (mPa·s) bei Temperaturen >15°C zu halten.

9. Verfahren gemäß Anspruch 8, **dadurch gekennzeichnet, daß** die Viskosität bei 1.000 bis 5.000 cp (mPa·s) gehalten wird.

10. Verfahren gemäß Anspruch 8 oder 9, **dadurch gekennzeichnet, daß** die Pulver-zu-Flüssigkeit-Zufuhrrate >100 kg/m³ h beträgt.

11. Verfahren gemäß einem der Ansprüche 8 bis 10, **dadurch gekennzeichnet, daß** die Produktionstemperatur 50 bis 100°C, vorzugsweise 60 bis 80°C, beträgt.
